(19) Europäisches Patentamt
European Patent Office
Office européen des brevets

(11) **EP 2 993 643 A1**

(12) **EUROPEAN PATENT APPLICATION**
published in accordance with Art. 153(4) EPC

(43) Date of publication:
**09.03.2016 Bulletin 2016/10**

(51) Int Cl.:
***G06T 7/00*** (2006.01)

(21) Application number: **14791556.5**

(22) Date of filing: **20.03.2014**

(86) International application number:
**PCT/JP2014/057784**

(87) International publication number:
**WO 2014/178241 (06.11.2014 Gazette 2014/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.05.2013 JP 2013096821**

(71) Applicant: **Konica Minolta, Inc.
Tokyo 100-7015 (JP)**

(72) Inventor: **SASHIDA, Takehiko
Tokyo 100-7015 (JP)**

(74) Representative: **Hoffmann Eitle
Patent- und Rechtsanwälte PartmbB
Arabellastraße 30
81925 München (DE)**

(54) **IMAGE PROCESSING DEVICE, IMAGE PROCESSING METHOD, AND IMAGE PROCESSING PROGRAM**

(57)    An image processing apparatus, an image processing method, and an image processing program are provided, in which a template can be set appropriately when a region unsuitable for a template is included in a range subjected to template matching. The image processing apparatus includes an input unit for acquiring an input image to be used for generating a template, an accepting unit for accepting designation of an unsuitable region that is a region inappropriate for a template in the input image, and a generating unit for setting a plurality of regions serving as candidates for a template in the input image and determining a candidate with fewer unsuitable regions in the region of the candidate, as a template, from among the candidates for a template.

FIG.4

**Description**

TECHNICAL FIELD

The present invention relates to an image processing apparatus, an image processing method, and an image processing program for template generation in template matching.

BACKGROUND ART

Template matching techniques have been applied in a variety of fields. Examples of the application include testing and tracking the produced products. Such template matching techniques require the use of appropriate templates in order to increase the matching precision. A variety of techniques have been proposed for increasing the precision in such template matching techniques.

For example, Japanese Laid-Open Patent Publication No. 2005-346232 (PTD 1) discloses a pattern matching method capable of detecting an accurate recognition position even when a background presenting non-uniform and partial brightness level change is overlapped. More specifically, the pattern matching method disclosed in PTD 1 includes the steps of: subdividing a template image into a grid pattern with a predetermined size to generate a plurality of first subdivided template images; generating a plurality of second subdivided template images set to overlap the first subdivided template images at the same size and each having the point of intersection of the grid pattern arranged at the center of image; normalizing the first subdivided template images and the second subdivided template images; and calculating the degree of matching with a target image.

An image processing apparatus disclosed in Japanese Laid-Open Patent Publication No. 2010-165248 (PTD 2) performs template matching between a plurality of images. The image processing apparatus includes: template setting means for setting a template including a feature point as a reference template; image determination means for determining whether an image in the reference template set by the template setting means is divided by an edge; and modified template setting means for, if it is determined that the image in the reference template is divided, deleting a region not including a feature point in the divided region from the reference template and setting a modified template in which a region having an area equal to that of the deleted region is added to a region including a feature point in the divided region so as not to extend across the edge. With such a configuration, even when template matching is performed in the vicinity of the boundary of a subject at a different distance, the template size is not reduced, so that a distance can be calculated more precisely even in an image with occlusion.

CITATION LIST

PATENT DOCUMENT

PTD 1: Japanese Laid-Open Patent Publication No. 2005-346232
PTD 2: Japanese Laid-Open Patent Publication No. 2010-165248

SUMMARY OF INVENTION

TECHNICAL PROBLEM

The inventions disclosed in the prior art documents above are directed to a technique for increasing the precision of template matching, for example, by modifying a template prepared in advance. However, users who have a poor knowledge of template matching are often unable to even create a template appropriately in the first place.

For example, in a case where a template is generated from an image obtained by capturing an image of any given subject, if the image includes a region where part of the subject is not standing still, that is, changes in appearance overtime, such a region is not suitable for a template. However, even knowing such a place that is unsuitable for a template, users who have a poor knowledge of template matching cannot determine which region of the subject and what shape to use as a template, and it is difficult for them to generate an appropriate template.

In the method disclosed in PTD 1, it is necessary to fix a method of subdividing a template image into a grid pattern, and it is necessary to determine the size and the shape of a template. A region inappropriate for a template cannot be designated in advance.

In the method disclosed in PTD 2, a reference template is modified as necessary. However, there is no teaching as to appropriately setting a reference template.

An object of the present invention is to provide an image processing apparatus, an image processing method, and an image processing program capable of appropriately setting a template when a region unsuitable for a template is included in the range subjected to template matching.

SOLUTION TO PROBLEM

An image processing apparatus according to an aspect of the present invention includes an input unit for acquiring an input image to be used for generating a template, an accepting unit for accepting designation of an unsuitable region that is a region inappropriate for a template in the input image, and a generating unit for setting a plurality of regions serving as candidates for a template in the input image and determining a candidate with fewer unsuitable regions included in the region of the candidate, as a template, from among the candidates for a template.

Preferably, the generating unit includes a calculating unit for calculating a degree of appropriateness that is an indicator indicating validity as a template for each candidate for a template. The calculating unit outputs the degree of appropriateness as a smaller value as an area of the unsuitable region included increases.

Further preferably, the accepting unit further accepts designation of a suitable region that is a region suitable for a template in the input image. The calculating unit outputs the degree of appropriateness as a larger value as an area of the suitable region included increases.

Preferably, the generating unit generates a template from a candidate for a template in which the unsuitable region included does not exceed a predetermined permissible amount.

Preferably, each of the candidates for a template includes a plurality of regions. The calculating unit calculates a degree of appropriateness for each of the plurality of regions included in a candidate for a template and integrates respective degrees of appropriateness of the regions to calculate a degree of appropriateness for the candidate for a template.

Further preferably, the calculating unit outputs the degree of appropriateness as a smaller value as an area overlapping between regions included in a candidate for a template increases.

Preferably, the generating unit generates a template from a candidate for a template in which a number of regions included in the candidate for a template does not exceed a predetermined maximum number.

Preferably, the calculating unit calculates the degree of appropriateness for a candidate for a template, based on an image feature obtained from a region serving as the candidate for a template, in addition to information of the unsuitable region included in the region serving as the candidate for a template.

Further preferably, the calculating unit eliminates the image feature obtained from the unsuitable region included in a region serving as a candidate for a template, from calculation of the degree of appropriateness.

Preferably, the accepting unit further accepts designation of a maximum range that can be determined as a template in the input image. The generating unit sets a region serving as a candidate for a template within the maximum range.

An image processing method according to another aspect of the present invention includes the steps of: acquiring an input image to be used for generating a template; accepting designation of an unsuitable region that is a region inappropriate for a template in the input image; and setting a plurality of regions serving as candidates for a template in the input image and determining a candidate with fewer unsuitable regions included in the region of the candidate, as a template, from among the candidates for a template.

An image processing program according to another aspect of the present invention causes a computer to execute the steps of: acquiring an input image to be used for generating a template; accepting designation of an unsuitable region that is a region inappropriate for a template in the input image; and setting a plurality of regions serving as candidates for a template in the input image and determining a candidate with fewer unsuitable regions included in the region of the candidate, as a template, from among the candidates for a template.

ADVANTAGEOUS EFFECTS OF INVENTION

According to the present invention, a template can be set appropriately even when a region unsuitable for a template is included in the range subjected to template matching.

BRIEF DESCRIPTION OF DRAWINGS

Fig. 1 is a diagram showing an example of the procedure of generating a template according to the present embodiment.
Fig. 2 is a schematic diagram showing an exemplary image processing system according to the present embodiment.

Fig. 3 is a block diagram showing a configuration in which template matching and a template generating process according to the present embodiment are implemented by a personal computer.

Fig. 4 is a block diagram showing a functional configuration of an image processing apparatus according to the present embodiment.

Fig. 5 is a diagram showing an example of the input image output from an image input unit in the image processing apparatus according to the present embodiment.

Fig. 6 is a flowchart showing a process procedure for template generation according to the present embodiment.

Fig. 7 is a diagram for explaining setting of a maximum range in a process procedure for template generation according to the present embodiment.

Fig. 8 is a diagram for explaining setting of a point of origin for drawing a template rectangle in a process procedure for template generation according to the present embodiment.

Fig. 9 is a diagram for explaining setting of a template rectangle in a process procedure for template generation according to the present embodiment.

Fig. 10 is a diagram for explaining the advantage in generating a template considering an image feature for template generation according to the present embodiment.

Fig. 11 is a diagram for explaining the process of determining a template in accordance with the tendency of the degree of appropriateness in template generation according to the present embodiment.

Fig. 12 is a diagram for explaining the process of determining a plurality of regions as a template in template generation according to the present embodiment.

DESCRIPTION OF EMBODIMENTS

Embodiments of the present invention will be described in details with reference to the figures. The same or corresponding parts in the figures are denoted with the same reference signs and a description thereof is not repeated.

[A. Overview]

An image processing apparatus according to the present embodiment performs template matching in which a corresponding region (position) is specified in an image to be searched, using a template prepared in advance. The template used in template matching may be an image per se including information of color for each pixel or may be the amount of any given feature (for example, frequency information or information of the amount of edge) obtained from the image.

Typically, the image processing apparatus performs image matching in which an image having a particular pattern is prepared as a template, and a correlation value between the input image to be searched and the template is calculated to compare them, whereby a region (position) having the same pattern as the particular pattern is detected.

Such template matching methods include a brightness-based method such as SAD (Sum of Absolute Difference) and SSD (Sum of Squared Difference). Alternatively, a frequency-based method such as RIPOC (Rotation Invariant Phase Only Correlation), which is a position detection technique adapted for rotation, may be employed.

In template matching, the shape of a subject included in a template need to be fixed since the template serves as a sample of a region to be searched for. That is, in whatever circumstances an image to be searched is captured, the subject to be searched for that is included in the template has to be included in the same manner. That is, for example, in a case where a template is generated from an image obtained by capturing some subject, if there is a region where part of the subject is not standing still, that is, changes in appearance over time, that region is not suitable for a template.

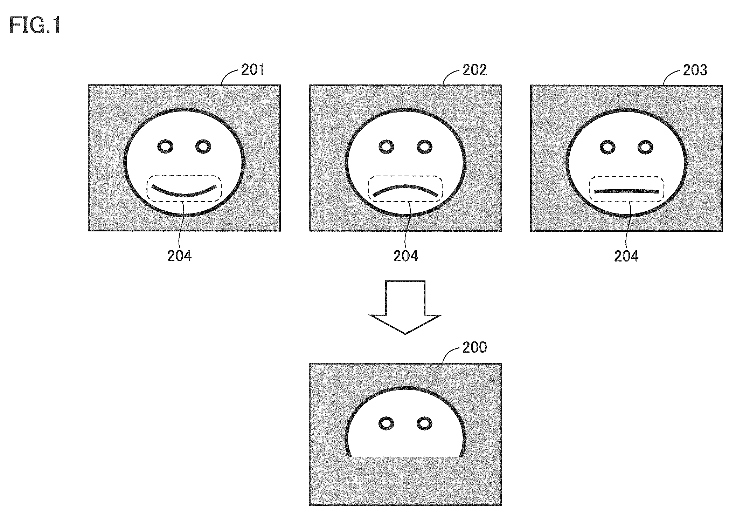

Fig. 1 is a diagram showing an example of the procedure of generating a template according to the present embodiment. Fig. 1 shows an example in which a template 200 is generated from three reference images 201, 202, 203. The subject included in reference images 201, 202, 203 shown in Fig. 1 includes a region (hereinafter may be referred to as "variable section") 204 that changes in appearance over time. Such a variable section 204 may occur, for example, when a subject partially varied, such as a mechanical part having a drive mechanism, is to be searched for. Such a variable section has to be eliminated from the template because it has an adverse effect on the matching precision in template matching.

Reference images 201, 202, 203 as shown in Fig. 1 are visually different although the object is the same because they include variable section 204. This adversely affects template matching. It is therefore necessary to generate a template 200 that does not include variable section 204.

However, it is difficult for users who have a poor knowledge of template matching to determine how to generate a template and what feature of the subject to include while eliminating variable section 204.

The image processing apparatus according to the present embodiment is directed to the function allowing users who have a poor knowledge of template matching to appropriately generate a template. More specifically, the present embodiment provides a configuration for generating a template more efficiently using information of a variable section recognized by the user.

[B. System Configuration]

First of all, an implementation example of template matching according to the present embodiment will be described.

<<b1: Application Example>>

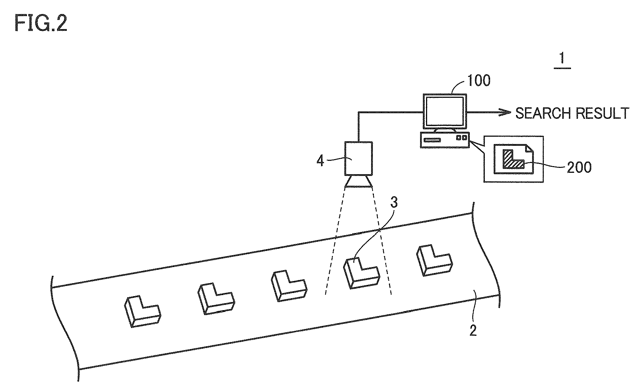

Fig. 2 is a schematic diagram showing an example of an image processing system 1 according to the present embodiment. Referring to Fig. 1, image processing system 1 is applied to a production line including a belt conveyor 2, by way of example. In this image processing system 1, works 3 are successively conveyed on belt conveyor 2, and the image of a work 3 is captured with a camera 4, whereby an image to be searched including the appearance of work 3 is acquired.

The image to be searched is transmitted to an image processing apparatus 100. Image processing apparatus 100 performs template matching on the image to be searched based on a template 200 held in advance. The search result obtained through this template matching is then output.

<<b2: Implementation Example by Personal Computer>>

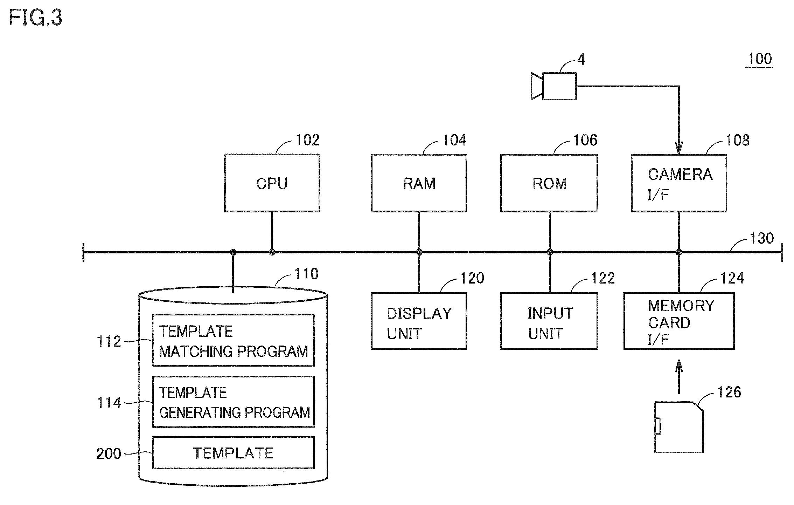

Fig. 3 is a block diagram showing a configuration in which template matching and a template generation process according to the present embodiment are implemented by a personal computer.

Referring to Fig. 3, image processing apparatus 100 implemented by a personal computer is mainly implemented on a computer having a general architecture. Referring to Fig. 3, image processing apparatus 100 includes, as main components, a CPU (Central Processing Unit) 102, a RAM (Random Access Memory) 104, a ROM (Read Only Memory)106, a camera interface (I/F) 108, an auxiliary storage device 110, a display unit 120, an input unit 122, a memory card interface (I/F) 124, and a camera interface (I/F) 108. The components are connected so as to be able to communicate with each other through a bus 130.

CPU 102 controls the entire image processing apparatus 100 by executing an OS (Operating System) and a variety of programs such as a template matching program 112 and a template generating program 114 stored, for example, in ROM 106 or auxiliary storage device 110. RAM 104 functions as a working memory for executing a program in CPU 102 and primarily stores various data necessary for executing the program. ROM 106 stores, for example, an initial program (boot program) executed in image processing apparatus 100 at startup.

Auxiliary storage device 110 typically includes a mass storage magnetic recording medium such as a hard disk and stores, for example, image processing programs for implementing a variety of processes according to the present embodiment (template matching program 112 and template generating program 114) and template 200. Auxiliary storage device 110 may additionally store a program such as an operating system.

Display unit 120 displays, for example, a GUI (Graphical User Interface) screen provided by the operating system and an image generated by executing template matching program 112 or template generating program 114.

Input unit 122 typically includes a keyboard, a mouse, and a touch panel and outputs the content of an instruction accepted from a user to, for example, CPU 102.

Memory card interface 124 writes/reads data into/from a memory card (nonvolatile recording medium) 126 such as an SD (Secure Digital) card and a CF (Compact Flash (registered trademark)) card.

Camera interface 108 takes in template 200 and/or a target image obtained by imaging a subject from camera 4. That is, the user captures an image of work 3 of interest arranged in the field view of camera 4 and thereby acquires an image including work 3 as template 200. The main body of image processing apparatus 100 may not have the function of capturing an image of a subject. In this case, typically, a necessary image is taken in through memory card 126 that stores a template-generating image and/or a target image acquired with some device. That is, memory card 126 is attached to memory card interface 124, and the template-generating image and/or the target image read from memory card 126 is stored (copied) into, for example, auxiliary storage device 110.

Template matching program 112 and template generating program 114 stored in auxiliary storage device 110 are stored and distributed on a recording medium such as a CD-ROM (Compact Disk-Read Only Memory) or distributed from a server device via a network. Template matching program 112 and template generating program 114 may implement a process by invoking necessary modules from among program modules provided as part of the operating system executed in image processing apparatus 100 (personal computer) in predetermined timing and order. In this case, template matching program 112 and template generating program 114 do not include modules provided by the operating system per se but may cooperate with the operating system to implement image processing. Template matching program 112 and template generating program 114 may not be independent programs but may be built in part of some program.

Also in such a case, template matching program 112 and template generating program 114 do not include modules shared with such a program per se but may cooperate with the program to implement image processing. Template matching program 112 and template generating program 114 that do not include some modules do not depart from the scope of the spirit of image processing apparatus 100 according to the present embodiment.

Some or all of the functions provided by template matching program 112 and template generating program 114 may be implemented by dedicated hardware.

<<b3: Implementation Example in Other Configuration>>

In addition to the example implemented by a personal computer as described above, at least one server device may implement processing according to the present embodiment in the form of cloud service.

[C. Functional Configuration]

Next, the functional configuration of the image processing apparatus and/or the image processing program according to the present embodiment will be described.

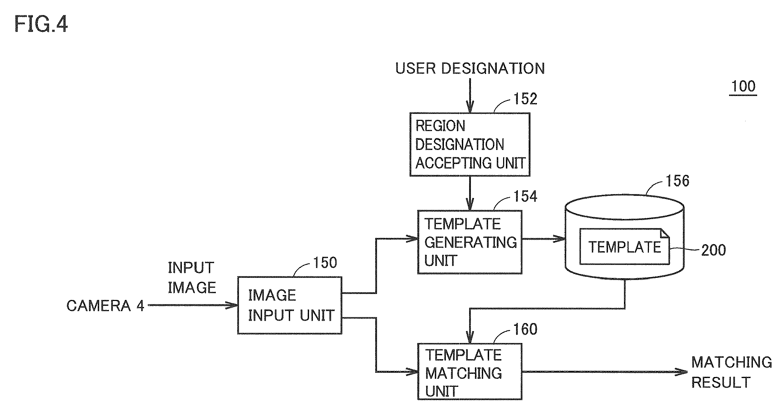

Fig. 4 is a block diagram showing a functional configuration of image processing apparatus 100 according to the present embodiment. Referring to Fig. 4, image processing apparatus 100 according to the present embodiment includes, as its main functional configuration, an image input unit 150, a region designation accepting unit 152, a template generating unit 154, a template storing unit 156, and a template matching unit 160. This functional configuration is implemented by CPU 102 executing template matching program 112 and template generating program 114 in image processing apparatus 100 shown in Fig. 3. The details of the functional configuration will be described below.

An input image generated by camera 4 capturing an image is accepted by image input unit 150. In other words, image input unit 150 acquires an input image to be used for generating a template. In generating a template, the input image is sent to template generating unit 154. In executing normal template matching, the input image is sent to template matching unit 160.

Region designation accepting unit 152 accepts designation of a region that is inappropriate for a template (hereinafter may be referred to as "unsuitable region") in the input image in the process of setting a template for use in image matching. That is, region designation accepting unit 152 accepts designation of a region that is inappropriate for a template in the input image, from the user.

Template generating unit 154 generates a template based on, for example, image information of the input image and information of the unsuitable region from region designation accepting unit 152. That is, template generating unit 154 determines a region to be used as a template for image matching while avoiding the unsuitable region, using the information of the unsuitable region given to region designation accepting unit 152 (and information of the input image). The template generated by template generating unit 154 is stored into template storing unit 156.

Template matching unit 160 performs image matching on the input image using the template stored in template storing unit 156.

The processing in each unit of image processing apparatus 100 according to the present embodiment will be described in details below.

<<c1: Image Input Unit 150>>

In the present embodiment, a neighboring image including a target of image matching is input to template matching unit 160. That is, image input unit 150 provides an image of the neighborhood of a search target cut out from the input image from camera 4 to template generating unit 154 or template matching unit 160.

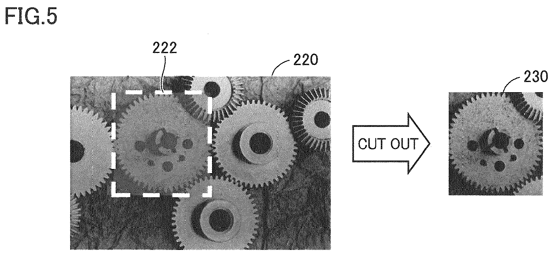

Fig. 5 is a diagram showing an example of the input image output from image input unit 150 of image processing apparatus 100 according to the present embodiment. Referring to Fig. 5, image input unit 150 outputs, as an input image 230, an image obtained by cutting out the neighborhood of a region 222 intended for image matching from original image 220 input from camera 4.

In such a cutting-out process, processing such as ROI (Region of Interest) setting generally performed in template matching can be used.

<<c2: Region Designation Accepting Unit 152>>

Region designation accepting unit 152 accepts from the user designation of a region (unsuitable region) that is inappropriate for a template in the input image. In other words, region designation accepting unit 152 accepts designation of an unsuitable region that is a region inappropriate for a template in the input image. The designation of an unsuitable region by the user is to generate a template more appropriately using the user's findings. The region to be set as an unsuitable region can be determined based on the criteria as follows.

As the simplest example, a region that includes noise and reflection and is obviously unusual as can be seen from the input image may be designated as an unsuitable region. As another method, a plurality of input images obtained by capturing images of the same subject may be compared with each other, and a portion with some variation (variable section) may be specified, so that the variable section is designated as an unsuitable region.

Alternatively, a region (unsuitable region) thought to be inappropriate for a template may be designated based on information other than the input image, such as the design data of the subject. For example, in the case where the design data clearly indicates that the subject is a driving part or that the material is not rigid, the corresponding part can be designated as an unsuitable region. By employing such a method, far-sighted knowledge that cannot be acquired by just looking at the input image can be used. Thus, an unsuitable region that cannot be judged from the input image can be generated more appropriately. As a result, a template excluding the unsuitable region can be created more effectively.

Designation of a region that is suitable for a template (hereinafter may be referred to as "suitable region") may be accepted at the same time, in addition to a region thought to be inappropriate for a template (unsuitable region). When such an unsuitable region and a suitable region are designated, a region that is neither inappropriate nor suitable for a template may be designated. In general, when a template is generated from an image obtained by capturing an image of a mechanical part or the like, the background region other than the mechanical part to be searched for is inevitably captured in the input image. For example, this is the case with a stage or a tray having a mechanical part thereon. The surface of an object corresponding to such a background region is a uniform image in many cases, and most of the effects of such a background region on image matching can be ignored. A more sophisticated template can be generated by designating a region that is neither inappropriate nor suitable for a template. That is, regions designated by the user in the input image are classified into three kinds, namely, a suitable region, an unsuitable region, and other region to enhance the quality of the template for use in template matching.

<<c3: Template Generating Unit 154>>

Template generating unit 154 generates a template for use in template matching, based on information of the unsuitable region designated by the user. Template generating unit 154 generates a template based on information of the input image while avoiding the designated unsuitable region since the unsuitable region is disadvantageous for template matching. That is, template generating unit 154 sets a plurality of regions serving as candidates for a template in the input image and determines the candidate including fewer unsuitable regions, as a template, from among the candidates for a template.

More specifically, a template preferably includes much information of a subject to be searched for. Template generating unit 154 therefore generates a template according to a predetermined rule such that "unsuitable regions are minimized in the template" and that "more regions suitable for a template are included".

Specific examples of information of the subject include edge, texture, brightness information, and frequency information. When a suitable region is designated, the region information thereof also can be regarded as information of the subject.

In terms of efficiency of calculation processing, the shape of the template may be limited. For example, when a method of using frequency information as a template is employed, the template is required to be rectangular so that FFT (Fast Fourier Transform) can be performed. In another example, the aspect ratio of the template shape is preferably closer to 1:1 so that the subject can be tracked even when it is displaced in any direction.

It is thus preferred that the shape of the template is taken into consideration when a template is generated.

«c4: Template Storing Unit 156»

Template storing unit 156 stores the template generated by template generating unit 154. A plurality of templates may be stored. In this case, an appropriate template may be selected one by one according to the attribute of the work to be searched for.

<<c5: Template Matching Unit 160>>

Template matching unit 160 performs template matching using the template stored in template storing unit 156. In general, template matching unit 160 uses a brightness-based method such as SAD and SSD or a frequency-based method such as POC.

In the template generating method according to the present embodiment, the template matching method is not particularly limited. It is noted that the flexibility in the shape of the template is relatively high in SAD, whereas in a method using frequency information such as POC, FFT is preferably employed for fast calculation and for this reason, the template shape has to be rectangular. The template generating method according to the present embodiment is combined with a method such as POC to achieve a higher effect.

[D. Process Procedure for Template Generation]

The process procedure for template generation in template generating unit 154 according to the present embodiment will now be described. Template generating unit 154 sets a plurality of candidates for a template in an input image by trial and error based on, for example, information designated by the user and calculates the degree of appropriateness for each of the set candidates. In other words, template generating unit 154 calculates the degree of appropriateness that is an indicator indicating the validity as a template for each candidate for a template.

The degree of appropriateness is an indicator indicating the validity as a template for use in template matching and can be calculated by various methods from a plurality of points of view as detailed below. Template generating unit 154 outputs a region with the largest degree of appropriateness among those successively calculated, as a final template.

More specifically, a template is generated according to the process procedure shown below.

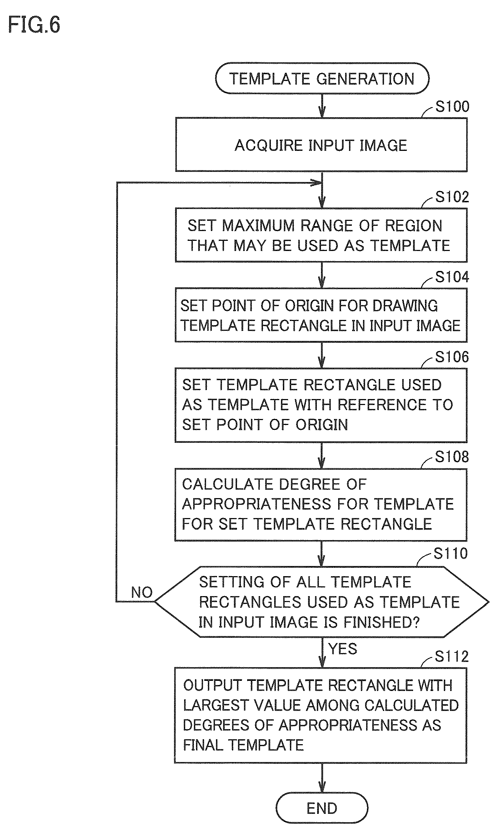

Fig. 6 is a flowchart showing the process procedure for template generation according to the present embodiment. Basically, each step shown in Fig. 6 is automatically executed by template generating unit 154. More specifically, each step shown in Fig. 6 is typically implemented, for example, by CPU 102 (Fig. 3) executing template generating program 114.

Referring to Fig. 6, first of all, image input unit 150 acquires an input image (step S100). Typically, image input unit 150 acquires an input image generated by capturing an image of work 3 with camera 4.

Template generating unit 154 then sets the maximum range of a region that may be used as a template (step S102). Template generating unit 154 sets a point of origin for drawing a template rectangle in the input image (step S104). Template generating unit 154 then sets a template rectangle to be used as a template with reference to the set point of origin (step S106). Template generating unit 154 then calculates the degree of appropriateness for a template for the set template rectangle (step S108).

Template generating unit 154 then determines whether the setting of all of template rectangles to be used as a template in the input image is finished (step S110). If the setting of all of template rectangles to be used as a template in the input image is not finished (NO in step S110), the processing subsequent to step S 102 is executed again.

If the setting of all of template rectangles to be used as a template in the input image is finished (YES in step S110), a template rectangle with the largest value among the degrees of appropriateness calculated so far is output as a final template (step S112).

The process then ends.

[E. More Detailed Processing for Template Generation]

The detailed processing in each step shown in Fig. 6 described above will be described.

<<e1: Setting of Maximum Range of Region That May be Used as Template>>

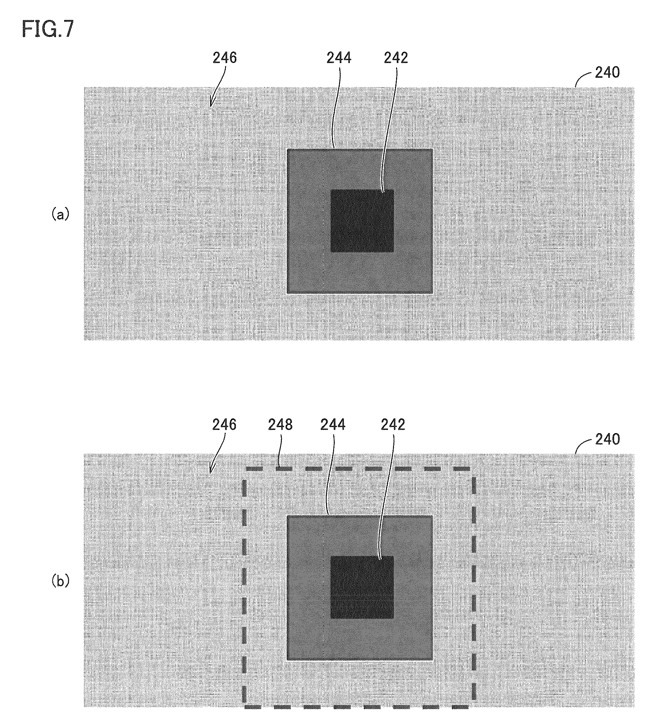

Template generating unit 154 sets the maximum range of a region that may be used as a template. Fig. 7 is a diagram for explaining the setting of the maximum range in the process procedure for template generation according to the present embodiment.

In the present embodiment, an image obtained by cutting out the neighborhood of a search target from the input image is input. In this case, when the size of a cutout image is large, the region initially set as an image for searching may be extremely small relative to the entire image. In such a case, it is assumed that there are a relatively large number of regions thought to be inappropriate for a template (unsuitable regions) and regions suitable for a template (suitable regions). For example, this is the case as shown in Fig. 7(a) in which an unsuitable region 242 is present in the inside of a suitable region 244 in an input image 240, and a larger background region 246 (the region that is neither a suitable region nor an unsuitable region) is present in the neighborhood. In this example, the background, which is unnecessarily large, is not desirable for generating a template.

In such a case, in calculating the degree of appropriateness for a template, the number of unnecessary candidates increases to increase the amount of calculation, and in addition, a template that unnecessarily includes many regions that are neither a suitable region nor an unsuitable region may be generated in some situations in which the degree of appropriateness is calculated. Template generating unit 154 then sets the maximum range of a region that may be used as a template. In doing so, region designation accepting unit 152 additionally accepts designation of the maximum range that can be determined as a template in the input image, and template generating unit 154 sets a region serving as a candidate for a template in the maximum range. As described above, the maximum range that can be used as a template rectangle is set, and template rectangles are successively set such that they do not extend beyond the maximum range. Setting the largest range in this manner can suppress unnecessary increase of regions other than suitable regions.

For example, as shown in Fig. 7(b), the range of the outer periphery including unsuitable region 242 and suitable region 244 is set as a maximum range 248. Setting maximum range 248 can suppress unnecessary processing and unnecessarily increase of the area of the template.

A predetermined value may be used for the maximum range set in this manner. In addition to such a method, the maximum range may be determined, for example, using information of the areas of an unsuitable region and/or a suitable region and the circumscribed rectangle.

The region outside the maximum range set in this manner is not used for calculating the degree of appropriateness for a template. In the processing described later, only the region defined by the maximum range is the region of interest.

The process for setting the maximum range may be executed by template generating unit 154, or the user may set the maximum range.

<<e2: Setting of Point of Origin for Drawing Template Rectangle>>

Template generating unit 154 sets the point of origin for drawing a template rectangle in the input image. This template rectangle is a candidate for a template to be generated, and the degree of appropriateness for a template is calculated for each of a plurality of template rectangles.

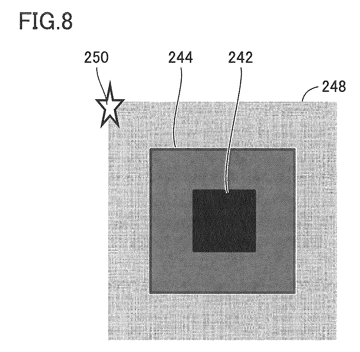

Fig. 8 is a diagram for explaining the setting of a point of origin for drawing a template rectangle in the process procedure for template generation according to the present embodiment. Referring to Fig. 8, a point of origin 250 is set for the maximum range 248 previously set. Template generating unit 154 sets point of origin 250 so as to avoid unsuitable region 242 previously set.

More specifically, a fixed point such as an image edge may be set as a point of origin, or the user may set a point of origin as desired. Alternatively, the input image may be divided at regular intervals into a grid pattern, and the point of intersection in the grid pattern may be set as a point of origin, or a point of origin may be set at random.

<<e3: Setting of Template Rectangle Used as Template>>

Template generating unit 154 sets a template rectangle serving as a candidate for a template in the input image with reference to the point of origin previously set.

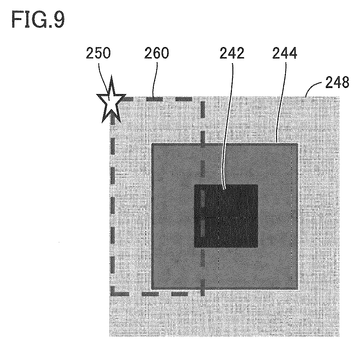

Fig. 9 is a diagram for explaining the setting of a template rectangle in the process procedure for template generation according to the present embodiment. Referring to Fig. 9, a plurality of template rectangles 260 are successively set with reference to point of origin 250 previously set.

The initial values of the dimensions (the horizontal and vertical size) of template rectangle 260 to be set may be predetermined values (fixed values) or may be determined from the size of the input image.

When template rectangle 260 is set, template rectangle 260 may be set while the unsuitable region is avoided, or the unsuitable region may be partially included. Although the unsuitable region is preferably eliminated from the template, in actuality, the unsuitable region may be included in the template to some extent, because the unsuitable region is inevitably included in some cases in order to incorporate an edge (boundary) into the template, or because the unsuitable region is sufficiently small relative to the entire template to be set and need not to be avoided.

<<e4: Calculation of Degree of Appropriateness for Template>>

Template generating unit 154 calculates the degree of appropriateness for a template for each of the set template rectangles. The degree of appropriateness can be calculated, for example, by a method with reference to the unsuitable region or a method using image information such as variations in amount or direction of edges and frequency information. The method of calculating the degree of appropriateness is described below.

(1-1) Calculation of Degree of Appropriateness with Reference to Unsuitable Region

First of all, the method of calculating the degree of appropriateness with reference to the unsuitable region will be described. In this case, the degree of appropriateness can be calculated with information of the unsuitable region designated by the user. That is, template generating unit 154 has the calculation function of calculating the degree of appropriateness for a template rectangle to be set. In this calculation function, the degree of appropriateness is reduced in accordance with the degree of the unsuitable region included in the template rectangle. In other words, the function of calculating the degree of appropriateness of template generating unit 154 outputs the degree of appropriateness as a smaller value as the area of the unsuitable region included in the template rectangle increases.

More specifically, the degree of appropriateness may be calculated using the proportion of the unsuitable region included in the template rectangle serving as a candidate. The unsuitable region may be given a negative weight so that the degree of appropriateness decreases as the unsuitable region increases. For example, the degree of appropriateness Aptness can be calculated according to the expression below.

$$Aptness = 1.0 - \frac{Size_{unsuitable}}{Size_{tmp}} \qquad ...(1)$$

where $Size_{tmp}$ is the area of the template rectangle, and $Size_{unsuitable}$ is the area of the unsuitable region.

In the example shown, the proportion of the area of the unsuitable region to the area of the template rectangle (entire region) is simply subtracted. However, the proportion may be multiplied by any given coefficient. In other words, in the expression above, the term ($Size_{unsuitable}/Size_{tmp}$) may be multiplied by any given coefficient $\alpha$ ($\alpha<1$).

As described above, a template region with fewer unsuitable regions can be set by reducing the degree of appropriateness depending on the area of the unsuitable region included in the template rectangle.

(1-2) Calculation of Degree of Appropriateness Considering Permissible Amount of Unsuitable Region

A permissible amount (area) of the unsuitable region that may be included in the template may be set, and the degree of appropriateness may be calculated with reference to the permissible amount of the unsuitable region. That is, when a template is determined, a maximum amount (permissible amount) of the unsuitable region included in the template is specified in advance, and the template is set such that the area of the included unsuitable region does not exceed the specified maximum amount. Specifying the maximum amount (permissible amount) of the unsuitable region as described above can suppress generation of a template that includes more unsuitable regions. In other words, template generating unit 154 generates a template from a candidate for a template that includes an unsuitable region not exceeding the predetermined permissible amount.

For example, the degree of appropriateness Aptness can be calculated according to the expression below. In this case, if the unsuitable region exceeds the permissible amount, the degree of appropriateness is zero.

$$Aptness = 1.0 - \frac{Size_{unsuitable}}{Size_{max}} \qquad ...(2)$$

where $Size_{max}$ is the permissible amount of the unsuitable region, and $Size_{unsuitable}$ is the area of the unsuitable region.

Although the area may be used per se as the permissible amount of the unsuitable region in the expression above, the permissible amount may be defined by the ratio of the unsuitable region to the area of the template rectangle or the ratio of the unsuitable region to the suitable region. For example, the degree of appropriateness Aptness can be calculated according to the expression below.

$$Aptness = 1.0 - \frac{\left( \dfrac{Size_{unsuitable}}{Size_{tmp}} \right)}{Ratio_{max}} \qquad ...(3)$$

where $Size_{tmp}$ is the area of the template rectangle, $Size_{unsuitable}$ is the area of the unsuitable region, and $Ratio_{max}$ is the permissible amount of the unsuitable region relative to the template rectangle.

A plurality of regions may be used as a template. That is, each of candidates for a template (template rectangle) may include a plurality of regions. In this case, one permissible amount may be set for the total of a plurality of regions. Alternatively, the permissible amount may be set for each region. That is, the function of calculating the degree of appropriateness of template generating unit 154 calculates the respective degrees of appropriateness for a plurality of regions included in a candidate for a template and also calculates the degree of appropriateness of the candidate for a template by integrating the respective degrees of appropriateness of the regions.

For example, the degree of appropriateness Aptness can be calculated according to the expression below.

$$Aptness = 1.0 - \sum_{i=1}^{N} \frac{Size_{unsuitable\_i}}{Size_{max\_i}} \qquad ...(4)$$

where

$Size_{max\_i}$ : unsuitable region in the i-th region permissible amount
$Size_{unsuitable\_i}$ : template unsuitable region included in the i - th region
$N$ : total number of regions
where $Size_{max\_i}$ is the permissible amount of the i-th unsuitable region, $Size_{unsuitable\_i}$ is the area of the unsuitable region included in the i-th region, and N is the total number of regions.

As described above, in the present example, the template is comprised of a plurality of regions, and the degree of appropriateness is calculated by integrating the degrees of appropriateness of the regions included in the template. By using a plurality of regions as a template as described above, a template can be created which stably covers the entire subject without depending on the distribution or shape of the unsuitable regions included in the subject and/or the template.

(2) Unsuitable Region and Suitable Region

When the user designates an unsuitable region and a suitable region, the degree of appropriateness may be calculated considering the proportion of the suitable region included in the template rectangle. That is, region designation accepting unit 152 accepts designation of a suitable region that is a region suitable for a template in the input image, and the function of calculating the degree of appropriateness of template generating unit 154 outputs the degree of appropriateness as a larger value as the area of the suitable region included in the template rectangle increases. For example, the degree of appropriateness Aptness can be calculated according to the expression below.

$$Aptness = \frac{Size_{suitable} - Size_{unsuitable}}{Size_{tmp}} \qquad ...(5)$$

where $Size_{tmp}$ is the area of the template rectangle, $Size_{suitable}$ is the area of the suitable region, and $Size_{unsuitable}$ is the area of the unsuitable region. That is, designation of a suitable region is accepted in addition to an unsuitable region, and the value corresponding to the degree at which the suitable region is included may be added as the degree of appropriateness.

In the expression above, the unsuitable region and the suitable region (and a region that is neither an unsuitable region nor a suitable region) may be given respective different weights. In other words, in the expression above, the degree of appropriateness is calculated with the proportion of the simple difference in area between the suitable region and the unsuitable region to the area of the template rectangle. However, the suitable region and the unsuitable region each may be multiplied by a coefficient. For example, in such a case where it is intended that a template that does not include an unsuitable region at all should be generated, the term (area) of the unsuitable region subtracted from the suitable region may be multiplied by a larger coefficient.

By calculating the degree of appropriateness by such a method, a template can be set in preference to a suitable region while avoiding an unsuitable region.

(3) Combination with Other Information

In the examples described above, the degree of appropriateness is calculated at least using information of the unsuitable region. However, the degree of appropriateness may be calculated in combination with a variety of information obtained from the image (hereinafter may be referred to as "image feature"), in addition to the information of the unsuitable region.

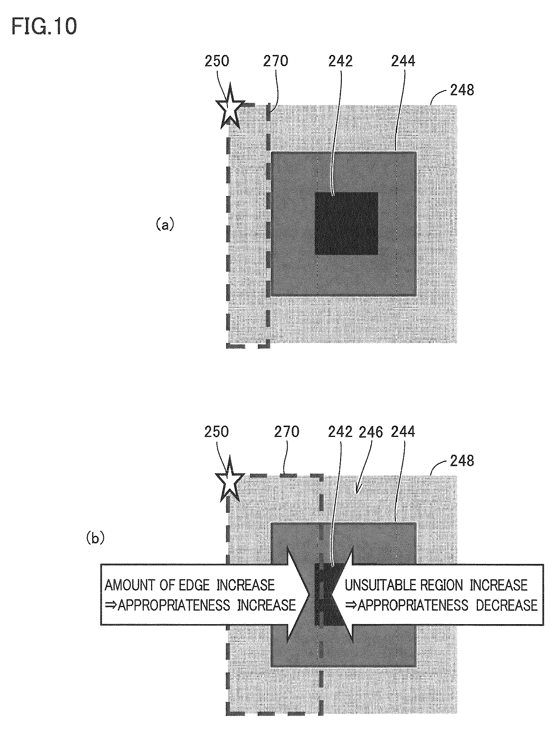

Fig. 10 is a diagram for explaining the advantages in generating a template considering the image feature for template generation according to the present embodiment. For example, when the degree of appropriateness is calculated based on the information of the unsuitable region alone, a template may not be generated appropriately as shown in Fig. 10(a). That is, in the case shown in Fig. 10(a), a template 270 that includes neither unsuitable region 242 nor suitable region 244 is generated. In the method of calculating the degree of appropriateness according to the single criterion based on unsuitable region 242 as described above, a template may not be generated appropriately.

In other words, merely calculating the degree of appropriateness based on information of the unsuitable region alone cannot ensure that the set template rectangle includes sufficient image information necessary for template matching.

By contrast, a template can be generated appropriately by calculating the degree of appropriateness by combining a variety of image features obtained from the image. That is, the function of calculating the degree of appropriateness of template generating unit 154 calculates the degree of appropriateness for a candidate for a template, based on the image feature obtained from the region serving as a candidate for a template, in addition to the information of the unsuitable region included in the region serving as a candidate for a template.

As an example, Fig. 10(b) shows a processing example in a case where template rectangle 260 to be set is gradually enlarged with reference to point of origin 250. As shown in Fig. 10(b), as the area of suitable region 244 included in template rectangle 260 increases, the area of background region 246 (the region that is neither a suitable region nor an unsuitable region) relatively decreases. As a result, the amount of edge in the image included in template rectangle 260 is increased. In other words, the larger is the amount of edge in the image included in template rectangle 260, the higher is the degree of appropriateness.

As template rectangle 260 increases and the area of unsuitable region 242 included in template rectangle 260 increases, the degree of appropriateness decreases, conversely.

By calculating the degree of appropriateness considering a plurality of factors as described above, the precision of the calculated degree of appropriateness can be improved, and a more appropriate template can be generated. That is, by calculating the degree of appropriateness based on the amount of feature obtained from the image in addition to information of the unsuitable region, the appropriateness for a template that cannot be determined only with information of the unsuitable region can be evaluated more appropriately, thereby generating a more appropriate template.

(3-1) Method Using Edge Information /Frequency Information

Edge information and frequency information of the image included in the template rectangle may be acquired as image features to be used for calculating the degree of appropriateness, and the degree of appropriateness based on image features can be calculated using such information, in combination with the degree of appropriateness calculated from information of the unsuitable region. In such a method of calculating the degree of appropriateness, edge information and frequency information for the image in the template rectangle can be used.

For the edge information for the image in the template rectangle, the gradient of image is calculated, and the number of pixels (that is, equivalent to the amount of edge) in which the magnitude of the calculated gradient of image exceeds a predetermined value can be used.

For the frequency information for the image in the template rectangle, an amplitude component image that indicates amplitude components in the frequency space is generated by performing frequency-conversion on the image (typically Fourier transform). The validity for each spatial frequency is calculated for the generated amplitude component image, based on the magnitude of amplitude, and the validity for each frequency can be used as frequency information.

Preferably, the degree of appropriateness is calculated after information of the image of the unsuitable region included in the template rectangle is eliminated, rather than calculating the degree of appropriateness based on information of the entire image included in the template rectangle. That is, if the template rectangle includes an unsuitable region, the image feature such as the edge of the unsuitable region is used in calculation of the degree of appropriateness, so that the precision of calculation of the degree of appropriateness may be degraded.

In order to avoid such a situation, it is preferable not to use the image feature of the unsuitable region in calculation of the degree of appropriateness. In other words, the function of calculating the degree of appropriateness of template generating unit 154 eliminates the image feature obtained from the unsuitable region included in the region serving as a candidate for a template, from the calculation of the degree of appropriateness. Not using the amount of feature of the image obtained from the unsuitable region in calculation of the degree of appropriateness prevents unduly high evaluation of the degree of appropriateness, for example, due to an edge in the unsuitable region, thereby correctly calculating the degree of appropriateness.

(3-2) Method Using Shape Information of Template Rectangle

The shape information of the template rectangle can be used as an image feature for use in calculation of the degree of appropriateness. For example, when RIPOC is used as template matching, it is preferable that a template has a larger area and is closer to a square (the aspect ratio is closer to 1). That is, the degree of appropriateness for a template may be calculated based on the area and the aspect ratio of the template rectangle. In this case, for example, the degree of appropriateness Aptness can be calculated according to the expression below.

$$Aptness_{size} = \frac{Size_{tmp}}{Size_{all}} \qquad ...(6.1)$$

$$Aptness_{ratio} = \frac{Length_{short}}{Length_{long}} \qquad \ldots(6.2)$$

$$Aptness = Aptness_{size} + Aptness_{ratio} \qquad \ldots(6.3)$$

where $Size_{all}$ is the area of the entire input image, and $Size_{tmp}$ is the area of the template rectangle. $Length_{short}$ is the length of the shorter side of the template rectangle, and $Length_{long}$ is the length of the longer side of the template rectangle.

In the expression above, the degree of appropriateness Aptness is calculated by combining the degree of appropriateness $Aptness_{size}$ dependent on the proportion of the template rectangle in the input image with the degree of appropriateness $Aptness_{ratio}$ dependent on the aspect ratio.

(3-3) Weighted Combination

When the degree of appropriateness is calculated by combining information of the unsuitable region with one or more image features as described above, it is preferable to appropriately change which information to use (or count) depending on the subject and the conditions of the environment. In other words, in a case where the sum of respective degrees of appropriateness calculated depending on pieces of information is determined as the final degree of appropriateness, the final degree of appropriateness may be calculated by giving a weight in accordance with the importance of each piece information when calculating the sum. In this case, for example, the degree of appropriateness Aptness can be calculated according to the expression below.

$$Aptness_{all} = \sum_{i=1}^{N} Weight_i \times Aptness_i \qquad \ldots(7)$$

where $Aptness_i$ is the degree of appropriateness calculated depending on each piece of information, $Weight_i$ is the weight corresponding to each piece of information, and N is the total number of pieces of information considered in calculating the degree of appropriateness.

(4) Evaluation of Tendency of Degree of Appropriateness

In the examples described above, an optimum template is generated based on the degree of appropriateness calculated for each template rectangle. In order to generate an optimum template more quickly, an optimum template may be determined considering the relation between a change in dimension of the template rectangle and a change of the degree of appropriateness.

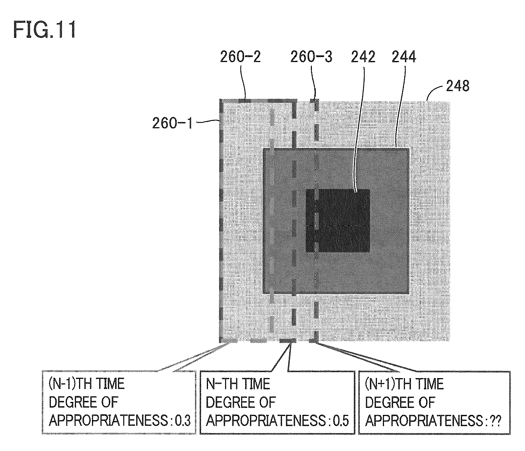

Fig. 11 is a diagram for explaining the process of determining a template in accordance with the tendency of the degree of appropriateness in template generation according to the present embodiment. Referring to Fig. 11, the degree of appropriateness is calculated for each of template rectangles 260 serving as a plurality of candidates for a template while gradually enlarging template rectangle 260 with reference to point of origin 250. As shown in Fig. 11, it is assumed that the degree of appropriateness for template rectangle 260-1 set at the (n-1)th time is 0.3 and the degree of appropriateness for template rectangle 260-2 set at the n-th time is 0.5. If the degree of appropriateness for template rectangle 260-3 set at the following (n+1)th time is greater than 0.5, the template rectangle is further enlarged. By contrast, if the degree of appropriateness for template rectangle 260-3 set at the (n+1)th time is smaller than 0.5, it can be determined that template rectangle 260-2 is more preferable.

As described above, if the degree of appropriateness tends to increase based on the results of the degree of appropriateness calculated in the past, the dimensions of the template rectangle are continuously changed in the same direction as in the past.

The degrees of appropriateness are successively calculated while changing the dimensions of the template rectangle and the point of view, and the template rectangle with the largest value among the calculated degrees of appropriateness is determined as a template. In doing so, when the dimensions of the template rectangle are changed, as shown in Fig. 11, if the degree of appropriateness tends to increase in the process of calculating the degree of appropriateness in the past, the dimensions may be changed in the same direction as in the past. Alternatively, if the degree of appropriateness turns to decrease, the direction in which the dimensions of the template rectangle are changed and/or the amount of change may be changed.

The dimensions of the template rectangle to be set may be changed according to a predetermined rule, or the direction or amount of change may be determined at random.

The setting of a template rectangle and the calculation of the degree of appropriateness may be repeated a predetermined number of times, and a template may be determined from the thus obtained results. Alternatively, the repetition may be terminated on condition that the degree of appropriateness successively calculated falls below the degree of appropriateness previously calculated.

(5) Plurality of Regions

In the examples described above, a single region is generated as a template. By contrast, a plurality of regions may be determined as a single template. In other words, depending on the shapes of the suitable region and the unsuitable region, using a single region as a template may not provide a sufficient amount of information and may fail to achieve precise pattern matching.

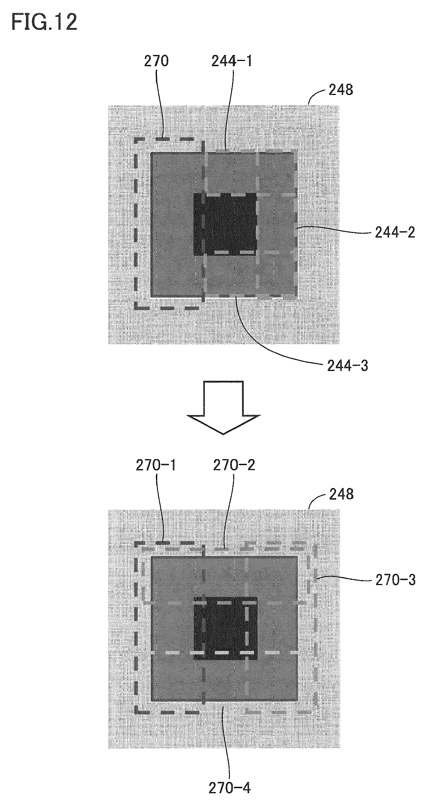

Fig. 12 is a diagram for explaining a process of determining a plurality of regions as a template in template generation according to the present embodiment. As shown in Fig. 12, if a single region is determined as a template 270, suitable regions 244-1, 244-2, 244-3 are present in a region other than template 270. If a template of a single region is used in this manner, sufficient information of the subject cannot be acquired, and template matching may not be executed appropriately. However, with a template including a plurality of regions 270-1, 270-2, 270-3, 270-4, a sufficient amount of information can be acquired from the subject, whereby template matching can be executed more precisely. As described above, template matching can be performed using a template including a plurality of regions.

In the method of calculating the degree of appropriateness for a template including a plurality of regions, whether the combination of regions is good or not is preferably evaluated in addition to the degree of appropriateness for each region. More specifically, the degree of appropriateness for each region included in the template is calculated according to any one of the methods described above, and, in addition, the degree of appropriateness is calculated as to which combination of regions is appropriate.

A template may be determined simply by combining regions with a high degree of appropriateness. However, an appropriate template may not be generated without considering the range of overlapping and the total number of regions included in the template. For example, there is an undesired possibility that a plurality of regions that include almost the same range are selected as a template or a template that includes a plurality of fine regions is employed. It is therefore preferable to calculate the degree of appropriateness based on the following criteria when a template including a plurality of regions is generated.

(i) The area of unsuitable regions is smaller when regions are combined.
(ii) The coverage ratio of the total suitable regions is higher.
(iii) The overlap ratio of a region (the proportion of a range specified in a plurality of regions) is lower.
(iv) The number of regions used in a template is smaller.

Each criterion is described in more details below.

(i) The area of unsuitable regions is smaller when regions are combined.

When the degree of appropriateness is calculated according to the criterion that the area of unsuitable regions is smaller when a plurality of regions to be used for a template are combined (the criterion (i) above), for example, the degree of appropriateness Aptness can be calculated according to the expression below.

$$Aptness = 1.0 - \frac{\sum_{i=1}^{N} Size_{unsuitable\_i}}{Size_{max}} \qquad ...(8)$$

where $Size_{max}$ is the permissible amount of unsuitable regions, $Size_{unsuitable\_i}$ is the area of unsuitable regions included in the regions combined as a template, and N is the total number of regions combined as a template.

(ii) The coverage ratio of the total suitable regions is higher.

Next, when the degree of appropriateness is calculated according to the criterion that the coverage ratio of suitable regions to the total area is higher (the criterion (ii) above), for example, the degree of appropriateness Aptness can be calculated according to the expression below.

$$Aptness = \frac{\sum_{i=1}^{N} Size_{suitable\_i}}{Size_{suitable\_all}} \qquad ...(9)$$

where $Size_{suitable\_all}$ is the total area of suitable regions, $Size_{suitable\_i}$ is the area of the suitable region included in each region combined as a template, and N is the total number of regions combined as a template.

(iii) The overlap ratio of a region (the proportion of a range specified in a plurality of regions) is lower.

Next, when the degree of appropriateness is calculated according to the criterion that the overlap ratio of a region (the proportion of a range specified in a plurality of regions) is lower (the criterion (iii) above), for example, the degree of appropriateness Aptness can be calculated according to the expression below.

$$Aptness = \sum_{i=1}^{N} \left( 1.0 - \frac{Size_{overlap\_i}}{Size_i} \right) \qquad ...(10)$$

where $Size_{overlap\_i}$ is the area overlapping with each other, $Size_i$ is the area of each region combined as a template, and N is the total number of regions combined as a template.

As described above, the function of calculating the degree of appropriateness of template generating unit 154 outputs the degree of appropriateness as a smaller value as the overlapping area between regions included in a candidate for a template increases. In other words, the degree of appropriateness is reduced in accordance with the degree of overlap between a plurality of regions used as a template. With such a method of calculating the degree of appropriateness, the overlapping regions are reduced, and a template that can provide image information can be generated efficiently.

(iv) The number of regions used in a template is smaller.

Next, when the degree of appropriateness is calculated according to the criterion that the number of regions used in a template is smaller (the criterion (iv) above), for example, the degree of appropriateness Aptness can be calculated according to the expression below.

$$Aptness = 1.0 - \frac{N-1}{num_{max}} \qquad ...(11)$$

where $num_{max}$ is the maximum number of regions combined as a template, and N is the total number of regions combined as a template.

As described above, the function of calculating the degree of appropriateness of template generating unit 154 generates a template among from candidates for a template in which the number of regions included in a candidate for a template does not exceed a predetermined maximum number. In other words, the total number of regions used as a template is controlled so as to be equal to or smaller than a predetermined number. By limiting the maximum number of regions in this manner, excessive division for a template is restricted, and a template suitable for image matching can be generated.

As described above, once the degree of appropriateness for a combination of regions is calculated, the degree of appropriateness for the template including a plurality of regions can be calculated based on the calculated degree of appropriateness and the degree of appropriateness for each region.

As such a method of calculating the degree of appropriateness for a template including a plurality of regions, the sum product of the degree of appropriateness for each region and the degree of appropriateness for a combination of regions may be calculated. For example, when the degree of appropriateness is calculated based on the total number of regions to be used as a template, the expression below may be employed.

$$Aptness_{all} = \left( 1 - \frac{num}{num_{max}} \right) \times \sum_{i=1}^{num} Aptness_i \qquad ...(12)$$

where Aptness$_{all}$ is the degree of appropriateness of the template including a plurality of regions, Aptness$_i$ is the degree of appropriateness of the i-th region, num is the total number of regions that can be combined as a template, and num$_{max}$ is the maximum number of regions combined as a template.

As described above, by combining the degrees of appropriateness in a state in which a plurality of regions are combined, a plurality of regions suitable for a template can be determined appropriately.

[F. Other Embodiments]

In the examples described above, a template is set in a rectangular shape. However, the template may be set in any shape. That is, the template may be set in any shape as long as the shape is suitable for algorithms of template matching executed using a template.

[G. Advantages]

According to the present embodiment, an appropriate template is automatically generated based on an unsuitable region (a region inappropriate for a template) designated by the user in the input image. Using such a function of generating a template, even a user who does not know specific contents of image processing can readily generate an appropriate template. In other words, the user only has to designate a region (unsuitable region) that the user does not want to use as a template, so that a plurality of candidates for a template (template rectangles) are generated based on the unsuitable region designated by the user, and a template is automatically generated from among the candidates.

In other words, since the image processing apparatus automatically generates a template while avoiding an unsuitable region, even a user who has poor experience or knowledge of image processing can generate a template appropriately.

The embodiments disclosed here should be understood as being illustrative rather than being limitative in all respects. The scope of the present invention is shown not in the foregoing description but in the claims, and it is intended that all modifications that come within the meaning and range of equivalence to the claims are embraced here.

REFERENCE SIGNS LIST

1 image processing system, 2 belt conveyor, 3 work, 4 camera, 100 image processing apparatus, 102 CPU, 104 RAM, 106 ROM, 108 camera interface (I/F), 110 auxiliary storage device, 112 template matching program, 114 template generating program, 120 display unit, 122 input unit, 124 memory card interface (I/F), 126 memory card, 130 bus, 150 image input unit, 152 region designation accepting unit, 154 template generating unit, 156 template storing unit, 160 template matching unit, 200 template.

**Claims**

1. An image processing apparatus comprising:

   an input unit for acquiring an input image to be used for generating a template;
   an accepting unit for accepting designation of an unsuitable region that is a region inappropriate for a template in the input image; and
   a generating unit for setting a plurality of regions serving as candidates for a template in the input image and determining a candidate with fewer unsuitable regions included in the region of the candidate, as a template, from among the candidates for a template.

2. The image processing apparatus according to claim 1, wherein

   the generating unit includes a calculating unit for calculating a degree of appropriateness that is an indicator indicating validity as a template for each candidate for a template, and
   the calculating unit outputs the degree of appropriateness as a smaller value as an area of the unsuitable region included increases.

3. The image processing apparatus according to claim 2, wherein

   the accepting unit further accepts designation of a suitable region that is a region suitable for a template in the input image, and

16

the calculating unit outputs the degree of appropriateness as a larger value as an area of the suitable region included increases.

4. The image processing apparatus according to claim 2 or 3, wherein the generating unit generates a template from a candidate for a template in which the unsuitable region included does not exceed a predetermined permissible amount.

5. The image processing apparatus according to any one of claims 2 to 4, wherein

each of the candidates for a template includes a plurality of regions, and
the calculating unit calculates a degree of appropriateness for each of the plurality of regions included in a candidate for a template and integrates respective degrees of appropriateness of the regions to calculate a degree of appropriateness for the candidate for a template.

6. The image processing apparatus according to claim 5, wherein the calculating unit outputs the degree of appropriateness as a smaller value as an area overlapping between regions included in a candidate for a template increases.

7. The image processing apparatus according to claim 4 or 5, wherein the generating unit generates a template from a candidate for a template in which a number of regions included in the candidate for a template does not exceed a predetermined maximum number.

8. The image processing apparatus according to any one of claims 2 to 7, wherein the calculating unit calculates the degree of appropriateness for a candidate for a template, based on an image feature obtained from a region serving as the candidate for a template, in addition to information of the unsuitable region included in the region serving as the candidate for a template.

9. The image processing apparatus according to claim 8, wherein the calculating unit eliminates the image feature obtained from the unsuitable region included in a region serving as a candidate for a template, from calculation of the degree of appropriateness.

10. The image processing apparatus according to any one of claims 1 to 9, wherein

the accepting unit further accepts designation of a maximum range that can be determined as a template in the input image, and
the generating unit sets a region serving as a candidate for a template within the maximum range.

11. An image processing method comprising the steps of:

acquiring an input image to be used for generating a template;
accepting designation of an unsuitable region that is a region inappropriate for a template in the input image; and
setting a plurality of regions serving as candidates for a template in the input image and determining a candidate with fewer unsuitable regions included in the region of the candidate, as a template, from among the candidates for a template.

12. An image processing program causing a computer to execute the steps of:

acquiring an input image to be used for generating a template;
accepting designation of an unsuitable region that is a region inappropriate for a template in the input image; and
setting a plurality of regions serving as candidates for a template in the input image and determining a candidate with fewer unsuitable regions included in the region of the candidate, as a template, from among the candidates for a template.

FIG.1

EP 2 993 643 A1

FIG.2

FIG.3

CPU 102

RAM 104

ROM 106

CAMERA I/F 108

4

100

130

DISPLAY UNIT 120

INPUT UNIT 122

MEMORY CARD I/F 124

126

110

112 TEMPLATE MATCHING PROGRAM

114 TEMPLATE GENERATING PROGRAM

200 TEMPLATE

EP 2 993 643 A1

FIG.4

FIG.5

222 220 230 CUT OUT

FIG.6

```
              ( TEMPLATE GENERATION )
                          |
                          v            ,-S100
    +------------------------------------------+
    |          ACQUIRE INPUT IMAGE             |
    +------------------------------------------+
                          |
        +---------------->|
        |                 v            ,-S102
        |   +--------------------------------------+
        |   |  SET MAXIMUM RANGE OF REGION         |
        |   |  THAT MAY BE USED AS TEMPLATE        |
        |   +--------------------------------------+
        |                 |            ,-S104
        |                 v
        |   +--------------------------------------+
        |   |  SET POINT OF ORIGIN FOR DRAWING     |
        |   |  TEMPLATE RECTANGLE IN INPUT IMAGE   |
        |   +--------------------------------------+
        |                 |            ,-S106
        |                 v
        |   +--------------------------------------+
        |   |  SET TEMPLATE RECTANGLE USED         |
        |   |  AS TEMPLATE WITH REFERENCE TO       |
        |   |  SET POINT OF ORIGIN                 |
        |   +--------------------------------------+
        |                 |            ,-S108
        |                 v
        |   +--------------------------------------+
        |   |  CALCULATE DEGREE OF                 |
        |   |  APPROPRIATENESS FOR TEMPLATE        |
        |   |  FOR SET TEMPLATE RECTANGLE          |
        |   +--------------------------------------+
        |                 |            ,-S110
        |                 v
        |          / SETTING OF ALL TEMPLATE \
        |   NO    /  RECTANGLES USED AS TEMPLATE  \
        +--------<   IN INPUT IMAGE IS FINISHED?    >
                  \                              /
                   _____/
                          | YES
                          v            ,-S112
    +------------------------------------------+
    | OUTPUT TEMPLATE RECTANGLE WITH           |
    | LARGEST VALUE AMONG CALCULATED           |
    | DEGREES OF APPROPRIATENESS AS            |
    | FINAL TEMPLATE                           |
    +------------------------------------------+
                          |
                          v
                     (   END   )
```

FIG.7

(a)

(b)

FIG.8

FIG.9

FIG.10

250   270   242   244
                              248

(a)

250   270   242 246 244
                              248

(b)

AMOUNT OF EDGE INCREASE
⇒APPROPRIATENESS INCREASE

UNSUITABLE REGION INCREASE
⇒APPROPRIATENESS DECREASE

FIG.11

260-2　260-3　242　244

260-1

248

| (N-1)TH TIME DEGREE OF APPROPRIATENESS:0.3 | N-TH TIME DEGREE OF APPROPRIATENESS:0.5 | (N+1)TH TIME DEGREE OF APPROPRIATENESS:?? |

FIG.12

## INTERNATIONAL SEARCH REPORT

| International application No. |
|---|
| PCT/JP2014/057784 |

A. CLASSIFICATION OF SUBJECT MATTER
*G06T7/00(2006.01)i*

According to International Patent Classification (IPC) or to both national classification and IPC

B. FIELDS SEARCHED

Minimum documentation searched (classification system followed by classification symbols)
G06T7/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 6-89343 A (Yaskawa Electric Corp.), 29 March 1994 (29.03.1994), paragraphs [0002] to [0006] (Family: none) | 1-12 |
| A | JP 8-329110 A (Matsushita Electric Industrial Co., Ltd.), 13 December 1996 (13.12.1996), paragraphs [0039], [0046] (Family: none) | 1-12 |

☐ Further documents are listed in the continuation of Box C.   ☐ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 June, 2014 (02.06.14) | 17 June, 2014 (17.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005346232 A

- JP 2010165248 A